# EUROPÄISCHE PATENTANMELDUNG

(11) **EP 0 697 236 A1**
(43) Veröffentlichungstag der Anmeldung: **21.02.1996**
(21) Anmeldenummer: 95112259.7
(22) Anmeldetag: 04.08.1995
(51) Int. Cl.: B01D 53/66, B01D 53/86, B01D 53/00

(54) **Filtermaterial und Verfahren zur Entfernung von Ozon aus Gasen und Flüssigkeiten**

(30) Priorität: 15.08.1994 DE 4428710; 08.11.1994 DE 4439478
(71) Anmelder: HOECHST AKTIENGESELLSCHAFT, D-65929 Frankfurt am Main (DE)
(72) Erfinder: von Eysmondt, Jörg, Dr., D-65719 Hofheim (DE); Schleicher, Andreas, Dr., D-65615 Beselich (DE); Frank, Georg, Dr., D-72074 Tübingen (DE)

(57) **Zusammenfassung**

Die Erfindung bezieht sich auf ein Filtermaterial sowie ein Verfahren zur Entfernung von Ozon aus Gasen und Flüssigkeiten, bei welchem ein Gasstrom oder eine Flüssigkeit mit einem Filtermaterial aus substituierten Polyarylenethern in Kontakt gebracht wird. Das Filtermaterial kann bei allen ozonhaltigen Gasströmen und Flüssigkeiten verwendet werden. So findet es beispielsweise Anwendung bei der Beseitigung des bei der Sterilisation verwendeten oder aus einem Kopiergerät entstandenen Ozons, ferner zur Entfernung und Unschädlichmachung von Ozon in Flüssigkeiten.

## Beschreibung

Die Erfindung bezieht sich auf ein Filtermaterial, ein Filter sowie ein Verfahren zur Entfernung von Ozon aus Gasen und Flüssigkeiten, wobei ein Gas oder eine Flüssigkeit mit einem Filtermaterial, das einen Polyarylenether enthält, in Kontakt gebracht wird.

Es ist bekannt, daß bei elektrophotographischen Kopier- und Druckverfahren kleine Mengen von Ozon gebildet werden. Das entstehende Ozon wird von den verwendeten Geräten, beispielsweise Fotokopierer oder Laserdrucker, permanent in die Umgebungsluft abgegeben. Ozon belästigt nicht nur durch seinen Geruch, sonder wirkt auch in geringen Konzentrationen gesundheitsschädlich. Um hier Abhilfe zu schaffen, sind eine Vielzahl von Verfahren entwickelt worden, die die Entfernung des Ozons aus dem von derartigen Vorrichtungen freigesetzten Luftstrom beschreiben. Dabei wird das Ozon entweder zerstört oder chemisch oder physikalisch gebunden.

Bekannt ist die Zerstörung des Ozons durch Erhitzen oder durch Wechselwirkung mit einem Metallkatalysator (vgl. JP-60 197 223 und JP-60 19 115). Nachteilig sind bei der thermischen Zerstörung des Ozons allerdings der Energiebedarf und die hohe Temperatur, die zur vollständigen Ozonzersetzung notwendig sind.

Ferner ist bekannt, den Gasstrom durch ein Filter zu leiten, in dem das Ozon katalytisch zersetzt wird (vgl. JP-58 081 425). Das Basismaterial des Filters ist mit einer oder mehreren Metallverbindungen, Metallen oder Legierungen, beispielsweise Eisen-, Mangan- oder Nickelverbindungen imprägniert, denen weiterhin eine Verbindung oder ein Metall aus der Gruppe der Edelmetalle, beispielsweise Palladium oder Platin, zugegeben wird. Diese Katalysatoren sind sehr teuer und haben meist nur eine begrenzte Lebensdauer, da solche heterogenen Katalysatoren durch verschiedene Katalysatorgifte schnell desaktiviert werden.

Bekannt ist auch ein Filter bestehend aus einem Trägermaterial aus Aluminiumoxid oder Aktivkohle, das mit ethylenisch ungesättigten Verbindungen imprägniert ist, die mit dem Ozon reagieren, (vgl. DE 37 28 802). Nachteilig ist, daß die Verbindungen, beispielsweise Terpene, je nach Trägermaterial in vielen Fällen flüchtig sind, also in geringen Mengen ausgetragen werden können und somit verloren gehen. Außerdem steht nur ein geringer Teil des Filtergewichtes als aktiver Bestandteil zur Verfügung.

Weiterhin ist ein Filter zur Ozonzersetzung bekannt, das aus einer Faserplatte besteht, deren Fasern einen ozonzersetzenden Katalysator enthalten (vgl. JP-03 270 718). Diese Fasern, die in einer bevorzugten Ausführungsform porös sind, bestehen aus einem Polymer mit einer der folgenden funktionellen Gruppen, die mit Ozon stark reagieren, z.B. -SH, =S, -NH₂, =NH, -CN und -OH. Als ozonzersetzende Katalysatoren werden Metalle wie Gold, Silber, Kupfer, Palladium, Eisen, Nickel, Kobalt und Mangan oder ihre Oxide sowie Tonerde und Kieselgur genannt. Die für die Herstellung des Filters benötigte Faser wird nach einem üblichen Spinnprozeß erhalten, wobei der Katalysator in der Spinnlösung dispergiert und nach dem Spinnen gleichmäßig in der Faser verteilt ist. Durch Zugabe eines zweiten Polymers, das mit dem ersten Polymer eine Phasentrennung hervorruft, und verschiedene Nachbehandlungen des Spinnproduktes erhält man eine poröse Phase, in der die Katalysatorpartikel enthalten sind. Die erhaltenen Fasern werden dann nach üblichen Methoden zu dem Filter konfektioniert. Abgesehen davon, daß die als geeignet angesehenen Polymeren nur en bloc genannt werden - offenbart ist ausschließlich Polyacrylnitril - ist die Herstellung der Filter umständlich und sehr aufwendig.

Aufgabe der Erfindung war es daher, ein Filtermaterial, ein Filter und ein Verfahren zur Ozonentfernung ohne die genannten Nachteile zur Verfügung zu stellen.

Die Erfindung betrifft ein Filtermaterial zur Entfernung von Ozon aus Gasen und Flüssigkeiten, dadurch gekennzeichnet, daß das Filtermaterial einen Polyarylenether enthält.

Ein weiterer Gegenstand der Erfindung ist ein Filter zur Entfernung von Ozon aus Gasen und Flüssigkeiten, das ein einen Polyarylenether enthaltendes Filtermaterial enthält.

Die Erfindung betrifft auch ein Verfahren zur Entfernung von Ozon aus Gasen und Flüssigkeiten, bei welchem ein Filtermaterial, das einen Polyarylenether enthält, eingesetzt wird, wobei das Gas oder die Flüssigkeit mit der Oberfläche des Filtermaterials in Kontakt gebracht wird.

Ein Polyarylenether ist ein Polymer, das mindestens eine Arylenether-Einheit (-A-O-; A steht für Arylen) enthält. Ein Arylen bezeichnet eine aromatische Einheit mit zwei Bindungsstellen, z.B. -C₆H₄-. Ein- oder mehrkernige Aromaten können eine Aryleneinheit bilden, wie Benzol, Pyridin, Naphthalin, Phenanthren, Anthracen. Bevorzugt sind substituierte Aryleneinheiten. Arylen-Substituenten können beispielsweise sein:
- C₁-C₁₈-Alkyl,: wie -CH₃, -C₂H₅, -C₃H₇, -C₄H₉, -C₅H₁₁, -C(CH₃)₃, -CH₂-CH(CH₃)₂, -C₂H₄-CH(CH₃)₂, -CH₂-C(CH₃)₃;
- C₁-C₁₈-Hydroxy-Alkyl,: wie -CH₃OH, -C₂H₄OH, -C₃H₆OH, -CH₂-CH(CH₃)₂-CH₂OH;
- C₁-C₁₈-Alkoxy,: wie -OCH₃, -OC₂H₅, -OC₃H₇, -OC₄H₉, -OC₅H₁₁, -OCH₂-CH(CH₃)₂, -OC₂H₄-CH(CH₃)₂, -OCH₂-C(CH₃)₃;
- Aryloxy,: wie -OC₆H₅, 2-Oxy-Naphthyl;
- Aryl,: wie Phenyl, Naphthyl, CH₃C₆H₄-, CH₃C₆H₄-, (CH₃)₃C₆H₄-;
- Aryl-C₁-C₁₈-Alkyl,: wie -CH₂C₆H₅, -C₂H₄C₆H₅;
- Halogen,: wie -F, -Cl, -Br, -I,
- Amino: (-NH₂),
- Hydroxy: (-OH),
- Carboxy: (-COOH),
- Nitro: (-NO₂),
- Wasserstoff: (-H).

Besonders bevorzugt sind Aryleneinheiten, die eine oder mehrere lineare oder verzweigte C₁-C₁₈-Alkylgruppen, vorzugsweise C₁-C₆-Alkylgruppen, tragen.

Polyarylenether sind beispielsweise Oligo- oder Polymere, die mindestens eine Einheit der Formel (I)

-[(A¹)ₙ-O)]ₘ-[(A²)ᵢ-T)]ⱼ-[(A³)ₖ-X)]ₗ-[(A⁴)ₒ-Y)]ₚ- (I)

enthalten oder aus Einheiten der Formel (I) bestehen, wobei A¹, A², A³, A⁴ gleich oder verschieden sind und jeweils eine substituierte oder unsubstituierte Arylen-Einheit analog zu oben beschriebenen Arylen-Einheiten A darstellen, O für eine Sauerstoffbrücke steht, T, X und Y gleich oder verschieden sind und zweiwertige Verknüpfungsgruppen darstellen, ausgewählt aus -O-, -SO₂-, -S-, -SO-, -CO-, -CO₂-, Alkylen- oder Alkylidengruppen mit 1 bis 6 C-Atomen und n, m, i, j, k, l, o und p unabhängig voneinander Null oder die ganzen Zahlen 1, 2, 3 oder 4 sind, wobei ihre Summe mindestens 2 ergeben muß.

Bevorzugter Polyarylenether ist Poly-[2,6-dimethyl-phenylenoxid] mit Wiederholungseinheiten der Formel (II) 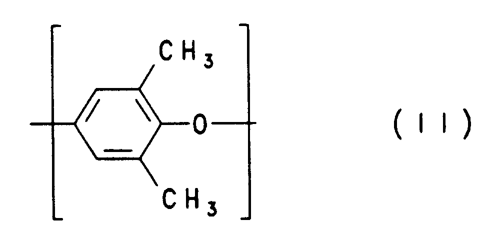
dessen Herstellung bekannt ist oder ein Polymerblend aus Poly-[2,6-dimethylphenylenoxid] und Polystyrol oder Polyamid.

Weitere, geeignete Polyarylenether enthalten mindestens eine Einheit der Formel (III) oder bestehen aus Einheiten der Formel (III), 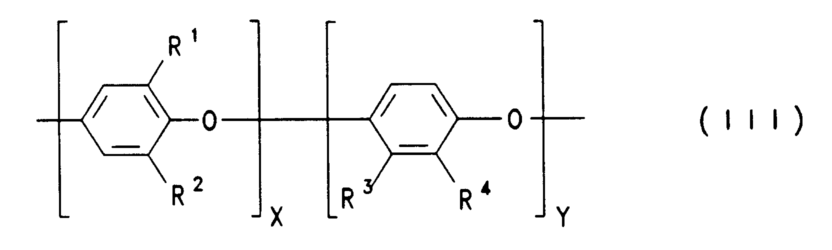
wobei
- x, y: für Zahlen im Bereich von 0 bis einschließlich 1 stehen und die Summe von x und y die Zahl 1 ergeben muß,
- R₁, R₂, R₃, R₄: stehen für Arylen-Substituenten, die oben beschrieben werden und gleich oder verschieden sein können. R₁, R₂, R₃, R₄ sind vorzugsweise C₁-C₁₈-Alkylgruppen, insbesondere C₁-C₆-Alkylgruppen.
Ein Polyarylenether kann mehrere unterschiedliche Einheiten der Formel (III) enthalten.

Im allgemeinen sind Polyarylenether geeignet, die ein mittleres Molekulargewicht M_{w} von 1 000 bis 2 000 000 g/mol, vorzugsweise von 10 000 bis 500 000 g/mol, insbesondere 20 000 bis 200 000 g/mol aufweisen.

Der Polyarylenether kann auch mit einem oder mehreren anderen Polymeren verschnitten sein.

Der Polyarylenether kann auch ein Blockcopolymer sein.

Blends, die mindestens einen Polyarylenether enthalten, können zur Entfernung von Ozon aus Gasen und Flüssigkeiten gemäß der Erfindung verwendet werden. Geeignete Blends sind beispielsweise Polyarylenether-Blends, die Polystyrol-Homopolymer und/oder Polystyrol-Copolymer und/oder Polyamid und/oder Polyolefin enthalten.

Beispiele für Polyarylenether und deren Herstellung sind in "Ullmann's Encyclopedia of Industrial Chemistry, 5. Auflage, Volume A21, B. Elvers (Ed.), VCH, Weinheim-Basel, Cambridge-New York 1992, Stichwort 'Poly (Phenylene Oxides)', Seite 605-614" aufgeführt, worauf Bezug genommen wird.

Polyarylenether und Polyarylenether-Blends werden im folgenden als Polymer bezeichnet.
Das Polymer kann zum Beispiel als Pulver, Granulate, Fasern, Vlies, Gewebe, Folien und/oder Formkörper verwendet werden. Die Pulver besitzen handelsübliche Teilchengrößen, wobei auch Granulate verwendbar sind. Wichtig hierbei ist es, daß das zu behandelnde Gas oder die Flüssigkeit durch das Pulver, beispielsweise in Form eines Festbettes ohne Störung durchgeleitet werden kann. Wird das Polymer als Faser verwendet, werden diese als Stapelfasern, Nadelfilz, "non woven" Material, Kardenband oder Gewebe eingesetzt. Auch Folien oder Folienschnipsel können in geeigneter Form Verwendung finden.

Das Polymer kann im allgemeinen als unverschnittenes Material eingesetzt werden. Möglich ist aber auch der Zusatz von Füllstoffen, wie Kreide, Talk, Ton, Glimmer, und/oder faserförmige Verstärkungsmittel, wie Glas- und Kohlenstoffasern, Whiskers, sowie weitere Zusatzstoffe und Verarbeitungshilfsmittel, z.B. Gleitmittel, Trennmittel, Antioxidantien, UV-Stabilisatoren, enthalten.

Beschichtungen von Trägermaterialien mit dem Polymer können durch Auftragen von Lösungen des Polymers (Lösemittel z.B. Toluol, Chloroform) auf das Trägermaterial erhalten werden. Imprägnierungen werden z.B. durch Tränken eines saugfähigen Trägermaterials hergestellt. Als Trägermaterial werden im allgemeinen anorganische Stoffe wie Glas, Kieselgel, Aluminiumoxid, Sand, keramische Massen, Metall und organische Stoffe wie Kunststoffe eingesetzt.

Dem Polymer können auch Stoffe aufgebracht werden, zum Beispiel Metalle, insbesondere Edelmetalle und Übergangsmetalle, oder Metalloxide wie Übergangsmetalloxide. Die Metalle oder Metalloxide können beispielsweise durch Aufimprägnieren auf das Polymer aufgebracht werden, die dann zum Beispiel in Form kleiner Cluster vorliegen.

Das Verfahren gemäß der Erfindung kann bei jeder Temperatur, die unterhalb des Erweichungspunktes der verwendeten Polymere liegt, durchgeführt werden. Im allgemeinen liegen die Anwendungtemperaturen im Bereich zwischen minus 10 bis 80°C, vorzugsweise zwischen 0 und 50°C.

Die Entfernung von Ozon erfolgt im allgemeinen quantitativ, wobei die Reaktionszeiten unter anderem von der Kontaktzeit beziehungsweise Strömungsgeschwindigkeit der zu reinigenden Gase oder Flüssigkeiten, der Oberfläche des Polymers, der Geometrie der Filtereinrichtung und der Temperatur abhängig sind. Im allgemeinen liegt die Zeit des Kontaktes des Polyarylenethers mit dem zu reinigenden Medium im Bereich zwischen 0,001 Sekunden und 10 Minuten, vorzugsweise zwischen 0,01 Sekunden und 5 Minuten, besonders bevorzugt 0,5 bis 1 Minute. Die Zeiten können aber auch über- oder unterschritten werden.

Die Größe der spezifischen Oberfläche des Polymers hat einen bedeutenden Einfluß auf die Filterwirkung des Polymers. Im allgemeinen ist die Filterwirkung des Polymers um so größer je größer die spezifische Oberfläche des Polymers ist. Eine große spezifische Oberfläche und poröse Strukturen des Polymers, wobei ein abgestimmtes Verhältnis von Mikro- und Makroporen sich als günstig erweist, sind für eine Filterwirkung besonders vorteilhaft. Die Filterwirkung des Polymers wird auch von der Kristallinität beziehungsweise von der Größe des amorphen Anteils des Polymers beeinflußt. Ein hoher amorpher Anteil im Polymer begünstigt im allgemeinen die Filterwirkung des Polymers.

Die Herstellung von Polyarylenethern mit großer Oberfläche, z.B. poröse Pulver, Fasern oder Membranen werden in der am 08.11.94 eingereichten deutschen Anmeldung mit dem Aktenzeichen P 44 39 478.0 und dem Titel "Filtermaterial auf Polymerbasis zur Entfernung von Komponenten aus Gasen und Flüssigkeiten" beschrieben, auf die Bezug genommen wird.

Das Filter und das Filtermaterial gemäß der Erfindung kann bei allen ozonhaltigen Gasströmen und Flüssigkeiten verwendet werden. So findet es beispielsweise Anwendung bei der Beseitigung des bei der Sterilisation verwendeten oder aus einem Kopiergerät entstandenen Ozons, ferner zur Entfernung und Unschädlichmachung von Ozon in Flüssigkeiten.

### Beispiele

Das in den Beispielen als Ausgangsstoff benötigte Ozon wurde in einem handelsüblichen Ozonerzeuger hergestellt, der mit reinem Sauerstoff gespeist wurde. Die Ozonkonzentration wurde mit einem Meßgerät APOA 350E der Firma Horiba (Industriestr. 8, D-61449 Steinbach) auf UV-Photometerbasis bestimmt. Anschließend wurde das Ozon-Sauerstoff-Gemisch mit Luft oder Argon bis zu den genannten Konzentrationen verdünnt. Da bekannt ist, daß sich Ozon in Wasser und in feuchten Gasen langsam zersetzt, wurden die zur Verdünnung eingesetzten Gase getrocknet. Nach der Verdünnung wurde der Gasstrom geteilt. Ein Teil wurde durch ein Leerrohr, ein anderer durch ein entsprechendes, mit dem Filtermaterial gefülltes vertikales Rohr geleitet. Um das Polymer aufnehmen zu können, war das Glasrohr am unteren Ende mit einer porösen Glasplatte (Fritte) verschlossen. Die Strömungsgeschwindigkeiten wurden so reguliert, daß pro Zeiteinheit gleiche Volumina durch die beiden Rohre strömten.

### Beispiel 1

In ein Glasrohr mit einem Durchmesser von ca. 25 mm, das am unteren Ende mit einer Glasfritte verschlossen war, wurden verschiedene Mengen eines Poly[2,6-Dimethyl-p-phenylenoxids] (Tg. 211°C, Tm; 268°C, Schüttdichte: 0,47g/cm³), das von der Firma Aldrich erworben wurde, eingefüllt. Durch dieses Pulverbett wurde der ozonhaltige Gasstrom geleitet. Dabei wurden nacheinander die Strömungsgeschwindigkeiten und die Ozonkonzentration eingestellt. Gemessen wurde über den jeweils in der Tabelle angegebenen Zeitraum.

**Tabelle 1**

| Vol. Strom [l/h] | Zeit (h) | Einwaage [g] | Ozonkonzentration (mg/m³) | Ozonkonzentration nach Filter (mg/m³) |
|---|---|---|---|---|
| 50 | 2 | 10,7 | 10.500 | -¹⁾ |
| 40 | 0,33 | 10 | 40000 | - |
| 120 | 24 | 1,9 | 0,66 | - |
| 120 | 3,5 | 3,5 | 0,66 | - |

| | | | | |
|---|---|---|---|---|
| ¹⁾ nicht nachweisbar | | | | |

### Beispiel 2

15 g Poly(2,6-Dimethylphenylenoxid), Handelsname ®Blendex HPP 820, wurden bei 90°C in 85 g N-Methylpyrrolidon (NMP) gelöst. Ein Teil dieser Lösung wurde mit einer Rakel auf einer Glasplatte zu einem Film mit einer Naßdicke von etwa 200 Mikrometer ausgezogen (Glasplatte und Rakel wurden zuvor auf 70°C erwärmt). Der ausgestrichene nasse Film wurde in 45°C warmes Wasser getaucht, die entstandene Membrane nach 2 Minuten von der Glasplatte abgetrennt und 24 Stunden in Wasser eingelegt, um Restlösemittel zu entfernen. Anschließend wurde die Membrane an der Luft getrocknet.

Ein kreisrunder Ausschnitt mit einem Durchmesser von 2 cm wurde in eine Membrantestzelle gespannt und mit einem Luftstrom durchströmt, der mit 100 ppb Ozon beladen war. Die mittlere Verweilzeit in der Membran betrug nur 2 ms. Der durch die Membran geleitete Luftstrom wurde auf seinen Ozongehalt analysiert (Ozonmeßgerät ML 9810 der Fa. Rhode & Schwarz). Es zeigte sich, daß die Ozonkonzentration unter der Nachweisgrenze von 1 ppb lag. Selbst nach 2 Stunden lag die Ozonkonzentration unter 1 ppb. Damit ist bewiesen, daß Ozon in weniger als einer Millisekunde Verweilzeit vollständig entfernt wurde.

### Beispiel 3

Der Versuch aus Beispiel 2 wurde wiederholt, jedoch wurde anstelle von Blendex der Polymerblend ®NORYL der Fa. General Electric, USA verwendet (er besteht aus einem homogen gemischten Blend aus PPO und Polystyrol). Es wurden diesselben Ergebnisse wie in Beispiel 1 erhalten, das bedeutet eine vollständige Entfernung von Ozon bei einer Verweilzeit von 2 ms bei einer Versuchsdauer von mehr als 2 Stunden.

### Beispiel 4

Durch Mischen von 80 g N-Methylpyrrolidon und 20 g Polyphenylenoxid wurde eine Ausformlösung hergestellt, die bei Temperaturen oberhalb 70°C homogen blieb. Die Lösung wurde filtriert und auf 80°C erhitzt und sodann über eine Spinnpfeife (90°C) zu einer Naßspinndüse (80°C) gefördert. Die Düse besaß 100 Löcher mit einem Durchmesser von 0,2 mm. Während des Spinnens tauchte die Düse in ein Fällbad aus 35°C warmem Wasser. Die Fällstrecke im Fällbad betrug 75 cm. Nach Durchlaufen mehrerer Waschbäder wurde die Faser naß aufgespult.

Eine Variante des Verfahrens ist die Herstellung von sogenanntem "Faserpulp", der durch direkte, nach der Koagulation (in Wasser bei Raumtemperatur) stattfindende mechanische Zerkleinerung gewonnen werden kann. Ein auf diese Weise hergestellter Pulp wurde mehrere Tage gewässert und dann bei 50°C getrocknet.

### Beispiel 5

### Ozon-Entfernung aus einem Gasstrom mit Hilfe von porösen PPO-Fasern bzw. Faserpulp

Die Materialien wurden in ein Glasrohr mit 30 cm Länge und 2,3 cm Innendurchmesser gegeben. Anschließend wurde das Glasrohr mit dem ozonhaltigen Gas bei Raumtemperatur durchströmt. Die Ozon-Konzentration vor und hinter dem Glasrohr wurde mit einem Ozon-Analysator der Fa. Fischer (Typ ®Ozotron 23) gemessen. Die Ergebnisse sind in der nachfolgenden Tabelle 2 zusammengestellt.

**Tabelle 2**

| | | |
|---|---|---|
| Polymermaterial | Polyphenylenoxid (®Blendex HPP 820) | Polyphenylenoxid (®Blendex HPP 820) |
| Morphologie | Faserpulp (50 µm Dicke) | Faserpulp (200 µm Dicke) |
| spez. Oberfläche [m²/g] | 300 | 400 |
| Einwaage [g] | 6,2 | 3,1 |
| Schüttvolumen: | 100 cm³ | 30 cm³ |
| Trägergas | Sauerstoff | Sauerstoff |
| rel. Feuchte [%] | 0 | 0 |
| Volumenstrom Trägergas [l/h] | 100 | 100 |
| Ozon-Konzentration - Eingang [mg/m³] | 10000 | 10000 |
| Ozon-Konzentration - Ausgang [mg/m³] bei Versuchsende | 0,0 | 0,0 |
| Versuchsdauer [h] | 3,25 | 1 |
| spez. Ozon-Aufnahme [% des Eigengewichts] | 52 % | 32 % |

### Beispiel 6

In eine auf 90°C vorgeheizte NMP-Lösung (1 dm³) wurde PPO-Pulver eingetragen und über einen schnell laufenden Rührer in Lösung gebracht. Die Polymerkonzentration wurde auf 5 bis 20 % eingestellt, vorzugsweise 15 %. Das verwendete Polyphenylenoxid-Pulver vom Typ Blendex HPP 820 besaß eine Korngröße von 0,2 bis 0,5 mm und eine spezifische Oberfläche von 1,1 m²/g.

Die homogene Polymerlösung wurde in einen beheizten Tropfrichter gegeben und auf 80°C thermostatisiert. Anschließend wurde die Lösung tropfenweise in ein auf 40 bis 80°C thermostatisiertes, gerührtes Wasserbad eingetragen, das als Fällbad diente. Alternativ kann auch ein beheizter Düsenkopf eingesetzt werden, um die Tropfen ins Fällbad einzutragen. Durch Wahl der Eintropfdüse, der Tropfgeschwindigkeit und Rührgeschwindigkeit im Fällbad kann die Morphologie und Größe der Kugeln variiert werden.

Beim Auftreffen auf das Fällbad erstarrten die Tropfen der Polymerlösung zu kugelartigen Formen. Durch kontinuierliche Zugabe von frischem, vorgewärmtem Wasser wurden über einen Überlauf suspendierte Kügelchen zusammen mit der verbrauchtem Fällbad-Lösung (Wasser/NMP) aus dem Fällbad ausgetragen. Die Verweilzeit der Kügelchen im Fällbad lag zwischen 5 und 20 Minuten.

Nach mehrmaligen Waschen mit Wasser und mehrstündigem Trocknen bei 90°C im Vakuumtrockenschrank (200 mbar) erhielt man ein abriebfestes Granulat aus PPO, das eine spezifische Oberfläche von mindestens 50 m²/g besaß (BET-Messung) und hervorragende Eigenschaften als Ozon-Filter hatte.

### Beispiel 7

Die Materialien aus Beispiel 6 wurden in ein Glasrohr mit 30 cm Länge und einem Innendurchmesser von 2,3 cm gegeben. Anschließend wurde das Glasrohr mit dem ozon-haltigen Gas bei Raumtemperatur durchströmt. Die Ozon-Konzentration vor und hinter dem Glasrohr wurde mit einem Ozon-Analysator der Fa. Fischer (Typ Ozotron 23) gemessen. Die Ergebnise sind in der nachfolgenden Tabelle 3 zusammengestellt.

**Tabelle 3**

| | | |
|---|---|---|
| Polymermaterial | Polyphenylenoxid (®Blendex HPP 820) | Polyphenylenoxid (®Blendex HPP 820) |
| Morphologie | Granulat (1,5 - 2,5 mm Korngröße) | Granulat (1,5 - 2,5 mm Korngröße) |
| spez. Oberfläche [m²/g] | 87 | 40 |
| Einwaage [g] | 6,2 | 6,2 |
| Schüttvolumen: | 28 cm³ | 29 cm³ |
| Trägergas | Sauerstoff | Sauerstoff |
| rel. Feuchte [%] | 0 | 0 |
| Volumenstrom Trägergas [ℓ/h) | 100 | 100 |
| Ozon-Konzentration - Eingang [mg/m³] | 10000 | 10000 |
| Ozon-Konzentration - Ausgang [mg/m³] bei Versuchsende | 0,0 | 0,0 |
| Versuchsdauer [h] | 2,1 | 1,8 |
| spez. Ozon-Aufnahme [% des Eigengewichts] | 34 % | 29 % |

### Beispiele 8 und 9

Entfernung von gelöstem Ozon aus Wasser mit PPO Granulaten

### Versuchsdurchführung:

Die verwendeten PPO-Granulate mit 1,5 bis 2,5 mm Korngröße wurden durch einen Phaseninversionsprozeß gemäß Beispiel 6 hergestellt.

Darüberhinaus wurden die Granulate mechanisch vorzerkleinert, intensiv mit Aceton und Wasser gewaschen und anschließend für 8 Stunden bei 100°C im Trockenschrank getrocknet. Die mittlere Korngröße des zerkleinerten Materials lag bei 1 mm, das Schüttgewicht bei 0,2 bis 0,25 g/cm³.

Für den Einsatz in flüssiger Phase wurden das getrocknete, hydrophobe PPO Material in ein Adsorptionsröhrchen aus Glas gefüllt (2,3 cm Innendurchmesser, 20 cm Länge) und zur Benetzung der Poren mit einem Wasser/Ethanol-Gemisch getränkt. Anschließend erfolgte eine Verdrängung des restlichen Ethanols durch Wasser, das über das Adsorptionsfilter gepumpt wurde.

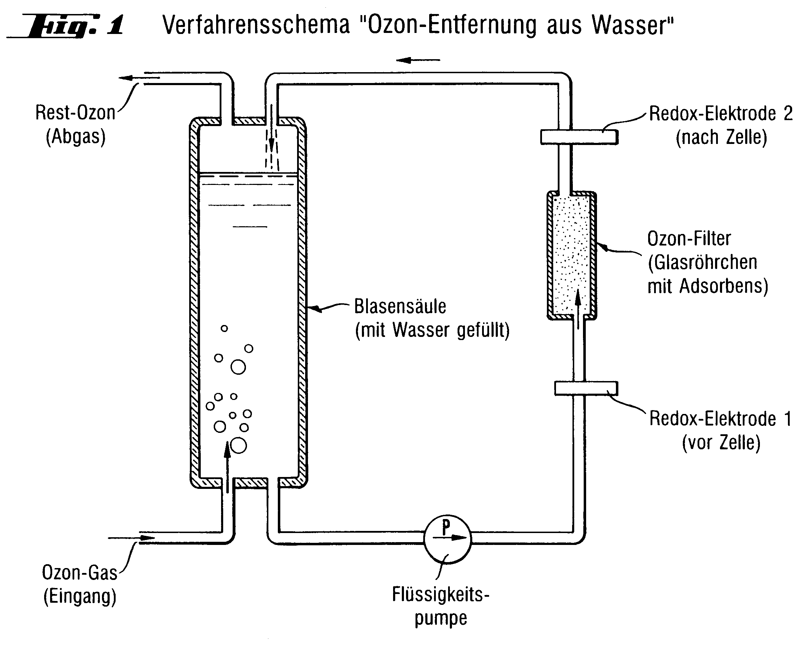

Eine mit 1,5 l Trinkwasser gefüllte Blasensäule wurde mit ozonhaltigem Sauerstoff begast (20 g O₃/m³). Über eine Zahnradpumpe wurde das ozonisierte Trinkwasser kontinuierlich über den Adsorptionsfilter und zurück in die Blasensäule gepumpt (siehe Abb. 1). Die Ozon-Konzentration wurde indirekt über das Redoxpotential vor und nach der Adsorptionszelle überprüft. Die Versuchsergebnisse sind in der nachfolgenden Tabelle 4 zusammengestellt.

**Tabelle 4**

| | | |
|---|---|---|
| Beispiel | 8 | 9 |
| Material | Polyphenylenoxid (PPO) | Polyphenylenoxid (PPO) |
| Morphologie | Granulat | Granulat |
| mittl. Korngröße [µm] | 1000 | 1000 |
| Einwaage [g] | 5,9 | 10 |
| Filtervolumen [cm³] | 25 | 42 |
| Filterlänge [cm] | 6 | 10 |
| Filterquerschnitt [cm²] | 2,3 | 2,3 |
| Flüssigkeit | Trinkwasser (ozonisiert) | Trinkwasser (ozonisiert) |
| Volumenstrom (Flüssigkeit) [l/h] | 20 | 40 |
| Verweilzeit (Flüssigkeit) [s] | 4,5 | 3,8 |
| Trägergas | Sauerstoff | Sauerstoff |
| Ozon-Konzentration (im Trägergas) [g/m³] | 20,0 | 20,0 |
| Redox-Potential [mV] (Trinkwasser, nicht ozonisiert) | 200 | 210 |
| Redox-Potential [mV] (ozonisiertes Trinkwasser, vor Filter) | 820 (ca. 4 mg/l O₃) | 860 (ca. 4 mg/l O₃) |

| Redox-Potential [mV] (ozonisiertes Trinkwasser, hinter Filter | | |
|---|---|---|
| 1 h Versuchsdauer | 270 (< 0,3 mg/l O₃) | 230 (< 0,2 mg/l O₃) |
| 2 h Versuchsdauer | 250 (< 0,3 mg/l O₃) | 220 (< 0,2 mg/l O₃) |
| 4 h Versuchsdauer | 230 (< 0,3 mg/l O₃) | 210 (< 0,2 mg/l O₃) |
| 6 h Versuchsdauer | 300 (< 0,5 mg/l O₃) | - |
| Gesamtversuchsdauer [h] | 6 | |

## Patentansprüche

1. Filtermaterial zur Entfernung von Ozon aus Gasen und Flüssigkeiten, dadurch gekennzeichnet, daß das Filtermaterial einen Polyarylenether enthält.

2. Filtermaterial nach Anspruch 1, dadurch gekennzeichnet, daß der Polyarylenether ein Poly-[2,6-Dimethylphenylenoxid] mit Wiederholungseinheiten der Formel (II) 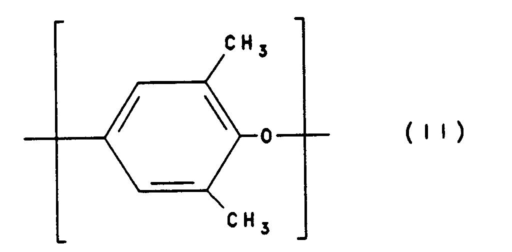 ist.

3. Filtermaterial nach Anspruch 1, dadurch gekennzeichnet, daß der Polyarylenether eine mittlere Molmasse M_{w} von 2 000 bis 2 000 000 hat.

4. Filter zur Entfernung von Ozon aus Gasen und Flüssigkeiten, das ein einen Polyarylenether enthaltendes Filtermaterial enthält.

5. Verfahren zur Entfernung von Ozon aus Gasen und Flüssigkeiten, bei welchem ein Filtermaterial, das einen Polyarylenether enthält, eingesetzt wird, wobei das Gas oder die Flüssigkeit mit der Oberfläche des Filtermaterials in Kontakt gebracht wird.

6. Verfahren nach Anspruch 5, dadurch gekennzeichnet, daß die Behandlungstemperatur -10 bis +80°C beträgt.

7. Verfahren nach Anspruch 5, dadurch gekennzeichnet, daß die Behandlungszeit 0,1 Sekunden bis 10 Minuten beträgt.

8. Verwendung eines Filtermaterials nach Anspruch 1 in Form von Pulvern, Fasern, Folien oder Formkörpern.
